# EUROPÄISCHE PATENTANMELDUNG

(11) **EP 4 450 338 A2**
(43) Veröffentlichungstag der Anmeldung: **23.10.2024**
(21) Anmeldenummer: 24197372.6
(22) Anmeldetag: 07.08.2019
(51) Int. Cl.: B60R 22/44

(54) **GURTAUFROLLER**

(30) Priorität: 08.08.2018 DE 102018213282
(62) Teilanmeldung aus: 21201466.6
(71) Anmelder: Autoliv Development AB, 447 83 Vårgårda (SE)
(72) Erfinder: Jabusch, Ronald, 25336 Elmshorn (DE); Clute, Günter, 25336 Elmshorn (DE)
(74) Vertreter: Müller Verweyen

(57) **Zusammenfassung**

Die Erfindung betrifft einen Gurtaufroller (40) mit einer Gurtspule (14), einem darauf zu einem Gurtwickel aufwickelbaren Sicherheitsgurt (12), und wenigstens einer ersten Baugruppe, wobei die erste Baugruppe koaxial zu der Drehachse der Gurtspule (14) und in Reihe zu der Gurtspule (14) angeordnet ist.

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung an einer Sitzstruktur oder an einer Fahrzeugstruktur und ist dafür aus einen entsprechend dicken Stahlblech hergestellt, welches zu einem U-förmigen Rahmen gebogen ist.

Fahrzeugsitze mit Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden muss. Die Gurtaufroller selbst weisen alle Grundbauteile eines Standardgurtaufrollers auf und werden nur mit verschiedenen, speziell für den Einbau in die Rückenlehne vorgesehenen Zusatzbaugruppen, wie z.B. einem sich selbst ausrichtenden Trägheitssensor versehen.

Der Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen von Cabriolets der Fall war.

Ein Problem besteht jedoch darin, dass der Gurtaufroller mit seinen weiteren Bauteilen aufgrund seiner Außenabmessungen einen vergleichsweise großen Bauraumbedarf aufweist, so dass der Einbau im Fahrzeugsitz problematisch sein kann. Dies ist insbesondere darauf zurückzuführen, da der Sicherheitsgurt für die aufzunehmenden Zugkräfte bei einer vorgegebenen Breite von z.B. 46 mm eine gewisse Mindestdicke und zur Rückhaltung des Insassen eine gewisse Mindestlänge von z.B. 2500 mm aufweisen muss, so dass der Gurtwickel auf der Gurtspule bei einem vollständig aufgewickelten Sicherheitsgurt aufgrund des aufzuwickelnden Volumens des Sicherheitsgurtes einen entsprechend großen Außendurchmesser aufweist. Dieser große Gurtwickel wird durch einen entsprechend großen Rahmen des Gurtaufrollers und durch weitere Bauteile wie z.B. einer Antriebseinrichtung eines irreversiblen Gurtstraffers, einen Elektromotor eines reversiblen Gurtstraffers, einer Kraftbegrenzungseinrichtung, Sensoreinrichtungen oder dgl. zur Außenseite hin weiter vergrößert, wodurch der Bauraumbedarf nochmals vergrößert wird.

Vor diesem Hintergrund liegt der Erfindung die Aufgabe zugrunde, einen Gurtaufroller bereitzustellen, welcher auch in einem begrenzten Bauraum eines Fahrzeugsitzes angeordnet werden kann.

Zur Lösung der Aufgabe wird ein Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird nach Anspruch 1 ein Gurtaufroller mit einer Gurtspule, einem darauf zu einem Gurtwickel aufwickelbaren Sicherheitsgurt und wenigstens einer ersten Baugruppe vorgeschlagen, bei dem die weitere Baugruppe koaxial und in Reihe zu der Gurtspule angeordnet ist, der Gurtaufroller an einem zwischen der Gurtspule und der ersten Baugruppe angeordneten ersten Steg gelagert ist, und wenigstens ein zweiter Steg zur Lagerung des Gurtaufrollers vorgesehen ist, welcher zu dem ersten Steg in Axialrichtung des Gurtaufrollers beabstandet ist, einer im Querschnitt U-förmigen Profilschiene mit einer Basisfläche und zwei gegenüberliegenden parallel zueinander verlaufenden von der Basisfläche hochstehenden wandförmigen Schenkeln, mit einer zwischen den Randseiten der Schenkel gebildeten Öffnung, welche durch ein Einsatzteil verschlossen ist, wobei das Einsatzteil einen zwischen den Schenkeln gebildeten Hohlraum verschließt, , in dem die Gurtspule und die erste Baugruppe angeordnet sind, wobei sich die Stege zwischen den Schenkeln drehfest abstützen, wobei eine zweite Baugruppe vorgesehen ist, welche koaxial und in Reihe zu der Gurtspule (14) und zu der ersten Baugruppe angeordnet ist, wobei der zweite Steg zwischen der ersten Baugruppe und der zweiten Baugruppe angeordnet ist, wobei die erste oder die zweite Baugruppe durch eine Kraftbegrenzungseinrichtung mit einem koaxial zu der Gurtspule angeordneten ersten Torsionsstab gebildet ist. Durch die vorgeschlagene Lösung kann der Gurtaufroller in einer platzsparenden Bauweise in einem schmalen länglichen Bauraum an dem Fahrzeugsitz angeordnet werden. Die erste Baugruppe wird bewusst in einer koaxialen Ausrichtung in Reihe zu der Gurtspule angeordnet, so dass sich eine längliche Geometrie des Gurtaufrollers verwirklichen lässt. Da die erste Baugruppe in Reihe zu der Gurtspule d.h. in Bezug zu der Längsrichtung der Drehachse der Gurtspule hinter oder vor der Gurtspule angeordnet ist, kann die erste Baugruppe so angeordnet werden, dass sie den Gurtwickel zur Außenseite wenn überhaupt nur geringfügig überragt. Da in Fahrzeugsitzen grundsätzlich zwar Hohlräume vorhanden sind, diese aber oft länglich und schmal ausgebildet sind, kann der Gurtaufroller durch die vorgeschlagene Lösung wesentlich besser an diese vorhandenen Bauräume angepasst und in diesen angeordnet werden. Die Baugruppe kann z.B. ein reversibler Gurtstraffer, ein irreversibler Gurtstraffer, eine Kraftbegrenzungseinrichtung, eine Sensoreinrichtung oder auch eine Steuereinrichtung sein. Sofern weitere Baugruppe vorgesehen sind, sind diese Baugruppen bevorzugt in Bezug zu der Drehachse der Gurtspule in Reihe also hintereinander angeordnet, wodurch die längliche Ausbildung des Gurtaufrollers fortgesetzt und weiter verlängert wird.

Weiter wird vorgeschlagen, dass der Gurtaufroller in einem oder mehreren zwischen einer Baugruppe und der Gurtspule oder zwischen zwei Baugruppen angeordnete Steg gelagert ist. Der Steg kann neben der Lagerung des Gurtaufrollers zusätzlich zu Aufnahme weiter Funktionseinheiten, wie z.B. Sensoren, Gasgeneratoren, Steuereinheiten oder dergleichen genutzt werden. Ferner kann der Steg zu einer Versteifung des lasttragenden Strukturteils genutzt werden. Der Steg ermöglicht insbesondere eine längliche Formgebung des Gurtaufroller mit in Reihe angeordneten Baugruppen.

Weiter wird vorgeschlagen, dass wenigstens ein zweiter Steg vorgesehen ist, welcher zu dem ersten Steg beabstandet ist. Durch den zweiten Steg kann die Lagerung des Gurtaufrollers weiter verbessert werden, und es können weitere Baugruppen und Funktionseinheiten z.B. für die weiteren Baugruppen des Gurtaufrollers vorgesehen werden.

Weiter wird vorgeschlagen, dass eine zweite Baugruppe vorgesehen ist, welche koaxial und in Reihe zu der Gurtspule und zu der ersten Baugruppe angeordnet ist. Durch die zweite Baugruppe kann der Gurtaufroller mit weiteren Funktionen versehen werden, wobei die Gurtspule und die erste Baugruppe wenigstens in ihrem Grundaufbau unverändert übernommen werden. Der Gurtaufroller kann dadurch einen modulartigen Aufbau aufweisen, welcher durch seinen modulartigen Aufbau kunden- und anwendungsspezifisch mit verschiedenen Funktionen versehen werden kann.

Dabei kann der zweite Steg bevorzugt zwischen der ersten Baugruppe und der zweiten Baugruppe angeordnet sein, so dass er gleichzeitig für zwei Baugruppen als Lagerstelle dient.

Weiter wird vorgeschlagen, dass die erste oder die zweite Baugruppe durch eine Kraftbegrenzungseinrichtung mit einem koaxial zu der Gurtspule angeordneten ersten Torsionsstab gebildet ist. Durch die vorgeschlagene Lösung kann der Gurtaufroller in einer möglichst schmalen kompakten Formgebung mit einem konstruktiv besonders einfachen Aufbau verwirklicht werden.

Weiter wird vorgeschlagen, dass die weitere Baugruppe in senkrechter Richtung zu der Drehachse der Gurtspule kleinere oder identische Außenabmaße als der maximale Außendurchmesser des Gurtwickels bei vollständig aufgewickeltem Sicherheitsgurt auf der Gurtspule aufweist. Da der Gurtwickel im Querschnitt kreisförmig ausgebildet ist und in den vorgesehenen Ausführungsbeispielen jeweils in einem Hohlraum mit einem viereckigen Querschnitt angeordnet ist, weisen die Hohlräume zur Aufnahme des Gurtaufrollers einen viereckigen Querschnitt mit wenigstens dem Durchmesser des maximalen Gurtwickels entsprechenden Seitenlängen auf. Damit ergeben sich in den Ecken jeweils angenähert dreieckförmige längliche Freiräume, die selbstverständlich auch genutzt werden können. Ein solches Hineinragen in diese Freiräume, soll im Sinne der Erfindung auch als innerhalb der durch den Gurtwickel maximalen Durchmessers vorgegebenen Außenabmaße verstanden werden.

Damit werden die maximalen Außenabmaße des Gurtaufrollers durch den vollständig aufgewickelten Gurtwickel mit einem maximalen Außendurchmesser vorgegeben, welcher aus den oben genannten Gründen ohnehin nicht reduziert werden kann. Damit kann der Gurtaufroller maximal schmal ausgebildet, so dass er auch in länglichen schmalen Bauräumen des Fahrzeugsitzes oder anderen Strukturen eines Fahrzeuges angeordnet werden kann. Sofern der Gurtaufroller in einem Hohlraum eines lasttragenden Strukturteils des Fahrzeuges oder des Fahrzeugsitzes befestigt ist, kann dieses auch den bisher erforderlichen Rahmen des Gurtaufrollers ersetzen, indem die Gurtspule des Gurtaufrollers direkt an dem lasttragenden Strukturteil gehalten und gelagert ist. Ferner können in diesem Fall die beim Rückhaltefall auftretenden Zugkräfte unmittelbar in das Strukturteil eingeleitet werden, wobei das lasttragende Strukturteil durch die Formgebung des Hohlraumes gezielt zur Aufnahme der Rückhaltekräfte ausgelegt werden kann. Sofern es sich bei dem lasttragenden Strukturteil um ein Strukturteil der Sitzstruktur handelt, ist dieses ohnehin zur Aufnahme von Sitzkräften und weiteren auf den Fahrzeugsitz einwirkenden Kräften ausgelegt und weist damit bereits eine ausreichend große Festigkeit auf, welche durch die vorgeschlagene Lösung auch zur Aufnahme der von dem Sicherheitsgurt ausgeübten Rückhaltekräfte genutzt werden kann. Ferner weist das lasttragende Strukturteil aufgrund des vorgesehenen Hohlraumes und der dadurch gegebenen dreidimensionalen Gestaltung eine besonders hohe Verwindungs- und Biegesteifigkeit auf, was wiederum für die Lastaufnahme und die Rückhaltung des Insassen im Unfall von Vorteil ist.

Weiter wird vorgeschlagen, dass die erste oder die zweite Baugruppe ein pyrotechnischer Gurtstraffer ist, welcher ein Strafferantriebsrohr mit einer darin vorgesehenen pyrotechnisch antreibbaren Antriebseinrichtung und eine die Antriebsbewegung der Antriebseinrichtung auf die Gurtspule übertragenden Antriebsrad aufweist, wobei das Strafferantriebsrohr einen Linearabschnitt und einen an dem Ende des Linearabschnittes angeordneten Krümmungsabschnitt aufweist, und das Strafferantriebsrohr derart angeordnet ist, dass der Linearabschnitt parallel zu der Drehachse der Gurtspule verläuft und mit dem Krümmungsabschnitt tangential in Umfangsrichtung auf das Antriebsrad gerichtet ist. Der Vorteil der vorgeschlagenen Ausbildung des pyrotechnischen Gurtstraffers ist darin zu sehen, dass er mit der vorgeschlagenen Formgebung und Anordnung des Strafferantriebsrohres besonders kompakt ausgeführt werden kann, wobei das Strafferantriebsrohr durch den Linearabschnitt und die parallele Anordnung zu der Drehachse bevorzugt in einen randseitigen linearen Freiraum an dem Gurtaufroller angeordnet werden kann, wodurch die Außenabmessungen des Gurtaufrollers wenn überhaupt nur geringfügig vergrößert werden.

Sofern die Kraftbegrenzungseinrichtung mit einem stufenförmigen Kraftbegrenzungsverlauf verwirklicht werden soll, kann diese wenigstens einen zweiten Torsionsstab aufweisen, welcher in Reihe zu dem ersten Torsionsstab angeordnet ist. Durch den zweiten Torsionsstab kann das Kraftbegrenzungsniveau je nach der Bemessung der beiden Torsionsstäbe mit unterschiedlichen Kraftbegrenzungsniveaus verwirklicht werden, wobei durch die koaxiale Anordnung wiederum ein kompakter, schlanker Aufbau des Gurtaufrollers verwirklicht werden kann.

Weiter wird vorgeschlagen, dass an einer Stirnseite der Gurtspule ein rohrförmiger, koaxial zu der Drehachse der Gurtspule angeordneter Fortsatz vorgesehen ist, in den der erste und/oder der zweite Torsionsstab hineinragt. Durch den Fortsatz wird die Gurtspule axial verlängert, und es wird ein Lageransatz für ein über eine Blockiereinrichtung blockierbares Blockierteil geschaffen, mit dem der erste und/oder der zweite Torsionsstab verbunden oder über eine Kupplung verbindbar ist. Der Torsionsstab ist wiederum entweder direkt mit der Gurtspule oder über den Fortsatz mit dieser drehfest verbunden, so dass er bei blockierten Blockierteil und einem Übersteigen einer definierten Gurtbandauszugskraft beginnt, sich um seine eigene Längsachse plastisch zu verformen und damit die Energie zu vernichten.

Weiter wird vorgeschlagen, dass der Gurtaufroller mit dem rohrförmigen Fortsatz an dem ersten und/oder dem zweiten Steg gelagert ist. Der Fortsatz wird damit zusätzlich zur Lagerung der Gurtspule genutzt, was insbesondere während der plastischen Verformung des oder der Torsionsstäbe von Vorteil ist, da dadurch die aufzunehmenden Kräfte möglichst nahe ihres Entstehungsortes durch die Lagerung aufgenommen und die entstehenden Drehmomente in der Lagerung klein gehalten werden können.

Weiter wird vorgeschlagen, dass die erste oder die zweite oder eine dritte Baugruppe durch einen reversiblen Gurtstraffer mit einem Elektromotor gebildet ist, wobei der Elektromotor mit seiner herausgeführten Antriebswelle koaxial zu der Drehachse der Gurtspule angeordnet ist.

Die Erfindung wird im Folgenden anhand bevorzugter Ausführungsformen unter Bezugnahme auf die beigefügten Figuren erläutert. Dabei zeigt
- Fig. 1: zwei Längsstreben eines Fahrzeugsitzes mit einem lasttragenden Strukturteil und einem darin angeordneten erfindungsgemäßen Gurtaufroller; und
- Fig. 2: das lasttragende Strukturteil mit einem Hohlraum und dem darin angeordneten erfindungsgemäßen Gurtaufroller als Einzelteil; und
- Fig. 3: eine Schnittdarstellung des lasttragenden Strukturteils mit dem Hohlraum und dem darin angeordneten erfindungsgemäßen Gurtaufroller; und
- Fig. 4: einen erfindungsgemäßen Gurtaufroller mit einem zweiteiligen Gehäuse

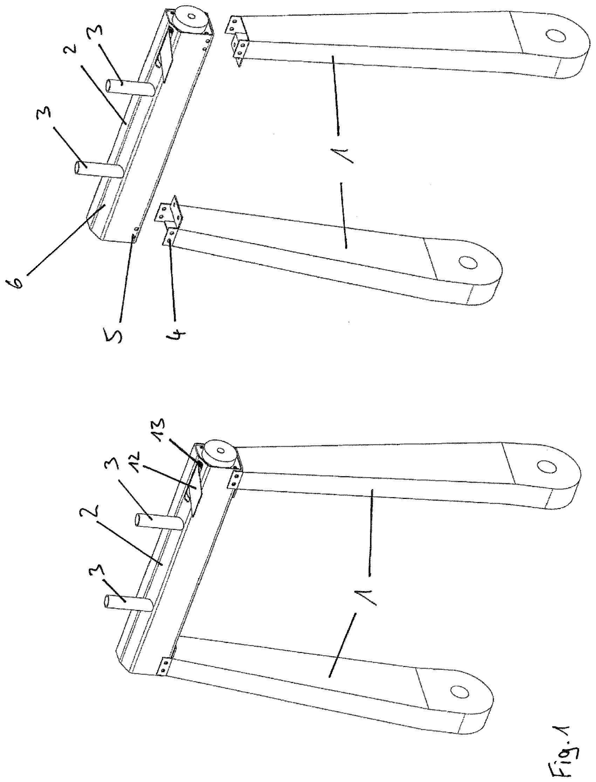

In der Figur 1 ist ein Teil einer Sitzstruktur eines Fahrzeugsitzes für ein Kraftfahrzeug zu erkennen, welcher die Rückenlehne des Fahrzeugsitzes bildet. Die Sitzstruktur bildet den formstabilen "Kern" des Fahrzeugsitzes und wird zusätzlich mit Federn und/oder einer Polsterung zur Verbesserung des Sitzkomforts versehen. Ferner sind an der Sitzstruktur weitere nicht dargestellte Funktionsbauteile wie z.B. Sitzverstellmechanismen, eine Kopfstütze, elektronische Geräte wie z.B. Displays, oder auch Heizeinrichtungen vorgesehen.

Die Sitzstruktur umfasst einen Verbund aus mehreren lasttragende Strukturteilen 2, wovon hier zwei durch parallel zueinander ausgerichtete Längsstreben 1 gebildet sind. Die oberen Enden der Längsstreben 1 sind durch ein lasttragendes Strukturteil 2 zu einer formstabilen Oberseite der Rückenlehne miteinander verbunden. Zur Verbindung der Längsstreben 1 sind an diesen hochstehende Laschen 4 mit Befestigungsöffnungen vorgesehen, und an dem Strukturteil 2 sind ebenfalls Befestigungsöffnungen vorgesehen, durch welche die Teile entweder durch Schrauben oder Niete miteinander verbunden werden.

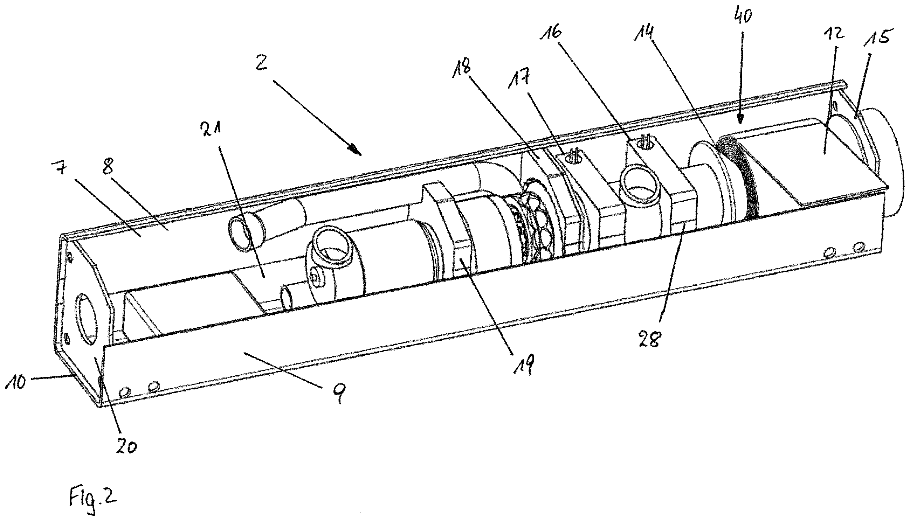

In der Figur 2 ist das lasttragende Strukturteil 2 in einer vergrößerten Darstellung, als Einzelteil zu erkennen. Das lasttragende Strukturteil 2 umfasst als Grundbauteil eine im Querschnitt U-förmige Profilschiene 7, mit einer Basisfläche 10 und zwei gegenüber liegenden, parallel zueinander verlaufenden, von der Basisfläche 10 hochstehenden wandförmigen Schenkeln 8 und 9. Die Profilschiene 7 weist eine zwischen den Randseiten der Schenkel 8 und 9 gebildete Öffnung 28 auf, welche durch ein in der Figur 1 zu erkennendes Einsatzteil 6 verschlossen ist, dass aber in der Figur 2 zur besseren Erkennbarkeit des Strukturteils 2 weggelassen wurde. Das Einsatzteil 6 ist durch eine Platte mit einer an die Form der Öffnung 28 angepassten Formgebung gebildet und weist einen Schlitz 13 auf, durch den ein nachfolgend noch näher beschriebener Sicherheitsgurt 12 aus einem Hohlraum 21 zwischen den Schenkeln 8 und 9 zur Außenseite hin auf einen zurückzuhaltenden Insassen auf dem Fahrzeugsitz geführt ist. Das Einsatzteil 6 verschließt bzw. verkleinert die Öffnung 28 bis auf den vorgesehenen Schlitz 13, so dass der Hohlraum 21 zur Außenseite hin verschlossen ist, und ein darin vorgesehener erfindungsgemäßer Gurtaufroller 40 vor mechanischen Einwirkungen geschützt ist. Die Stirnseiten der Profilschiene 7 sind jeweils durch einen Steg 15 und 20 verschlossen.

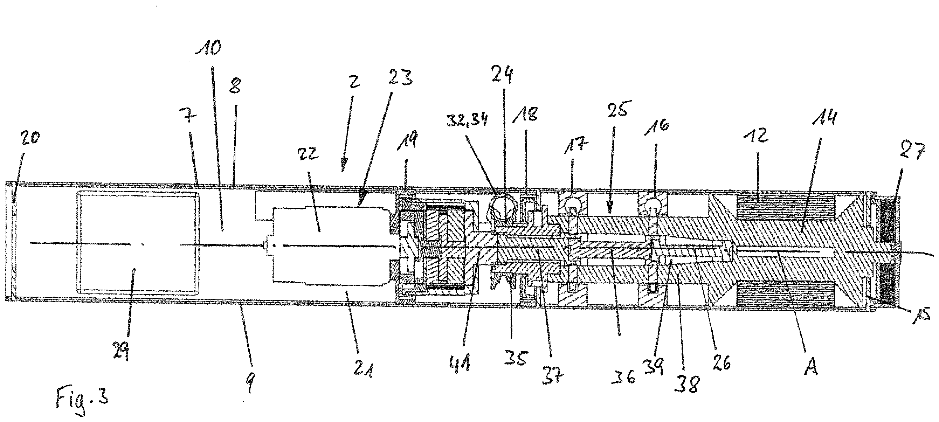

In dem Hohlraum 21 des lasttragenden Strukturteils 2 ist der Gurtaufroller 40 mit einer Gurtspule 14 und dem darauf aufwickelbaren Sicherheitsgurt 12 angeordnet, welcher in der Figur 3 in Schnittdarstellung zu erkennen ist. Der Gurtaufroller 40 weist neben der Gurtspule 14 eine weitere Baugruppe oder auch erste Baugruppe in Form einer Kraftbegrenzungseinrichtung 25 mit mehreren Torsionsstäben 26, 36 und 37, eine zweite Baugruppe in Form eines pyrotechnischen irreversiblen Gurtstraffers 24 und eine dritte Baugruppe in Form eines reversiblen elektromotorischen Gurtstraffers 23 in einer koaxialen Anordnung zu der Drehachse der Gurtspule 14 auf. Ferner sind die Baugruppen in Reihe, hintereinander zu der Gurtspule 14 angeordnet. Die Außenabmessungen der Gurtspule 14 mit dem darauf maximal aufgewickelten Sicherheitsgurt 12, sowie die Außenabmessungen der Kraftbegrenzungseinrichtung 25, des pyrotechnischen Gurtstraffers 24 und des elektromotorischen Gurtstraffers 23 sind in der Querschnittsfläche senkrecht zu der Drehachse der Gurtspule 14 so gewählt, dass sie nicht größer als die Außenabmessungen des Gurtwickels auf der Gurtspule 14 bei maximal aufgewickelten Sicherheitsgurt 12 sind. Ferner sind die Außenabmessungen nicht größer als die Abmaße des Hohlraumes 21 senkrecht zu der Längserstreckung der Profilschiene 7 sind, so dass der Gurtaufroller 40 mit den Baugruppen in dem Hohlraum 21 der Profilschiene 7 angeordnet werden können.

In der Profilschiene 7 sind mehrere Stege 15,16,17,18,19 und 20 in Form von senkrecht zu der Längserstreckung der Profilschiene 7 ausgerichteten Wandabschnitten vorgesehen, welche sich von einem der Schenkel 8 oder 9 bis zu dem jeweils anderen Schenkel 8 oder 9 der Profilschiene 7 erstrecken und mit diesen verbunden sind. Ferner können sich die Stege 15,16,17,18,19 und 20 bis zu der Basisfläche 10 der Profilschiene 7 erstrecken und damit die gesamte Querschnittsfläche der Profilschiene 7 ausfüllen. Die Stege 15,16,17,18,19 und 20 weisen jeweils eine oder mehrere Öffnungen oder Ansätze auf, in denen der Gurtaufroller 40 bzw. Teile davon wie z.B. die Gurtspule 14 gelagert, befestigt und/oder hindurchgeführt sind. Ferner kann z.B. einer der Stege 15,16,17,18,19 und 20 auch eine Verzahnung oder eine andersartige Blockiergestaltung aufweisen, in denen die Gurtspule 14 oder andere Teile des Gurtaufrollers blockierbar sind. Außerdem können die Stege 15,16,17,18,19 und 20 auch zusätzliche Hohlräume zur Aufnahme von weiteren Bauteilen des Gurtaufrollers wie z.B. pyrotechnische Treibsätze für den pyrotechnischen Gurtstraffer 24, elektronische Bauteile wie z.B. Sensoren, elektronische Steuereinheiten oder Speichereinheiten aufweisen. Sofern die Stege 15,16,17,18,19 und 20 sich von einem der Schenkel 8 oder 9 bis zu dem jeweils anderen Schenkel 8 oder 9 erstrecken, können die Stege 15,16,17,18,19 und 20 zusätzlich zur Versteifung der Profilschiene 7 genutzt werden, was wiederum für die Lastaufnahme und die Formstabilität der Profilschiene 7 im Rückhaltefall des Insassen von Vorteil ist. Die Bauteile des Gurtaufrollers 40 sind bewusst koaxial und hintereinander angeordnet, so dass die Baugruppen die Außenabmaße des Gurtaufroller radial nach außen nicht vergrößern, und der Gurtaufroller 40 auch in einem schmalen, länglichen Hohlraum 21 der Profilschiene 7 angeordnet werden kann. Dadurch kann die Profilschiene 7 und das lasttragende Strukturteil entsprechend schmal und länglich ausgebildet werden, wie dies insbesondere zur Verwendung des lasttragenden Strukturteils in einer Sitzstruktur des Fahrzeugsitzes von Vorteil ist.

In der Figur 3 ist das lasttragende Strukturteil im Schnitt durch die Profilschiene 7 und den Gurtaufroller zu erkennen. Die im Querschnitt U-förmige Profilschiene 7 weist die in dieser Darstellung dem Betrachter zugewandten Schenkel 8 und 9 und eine Basisfläche 10 auf. Zwischen den Schenkeln 8 und 9 ist der Hohlraum 21 vorgesehen, in dem der Gurtaufroller 40 angeordnet ist. Der Hohlraum 21 ist durch sechs Stege 15,16,17,18,19 und 20 in Längsrichtung der Profilschiene 7 unterteilt, wobei die beiden äußeren Stege 15 und 20 den Hohlraum 21 zur Außenseite an den beiden Enden der Profilschiene 7 verschließen. An dem rechten Steg 15 ist eine Federkassette mit einer Triebfeder 27 gehalten, welche ihrerseits mit der Gurtspule 14 verbunden ist und dadurch die Gurtspule 14 in Aufwickelrichtung des darauf aufgewickelten Sicherheitsgurtes 12 vorspannt. Die Gurtspule 14 ist an ihrem in die Profilschiene 7 hineinragenden Ende mit einer Kraftbegrenzungseinrichtung 25 versehen, welche durch einen koaxial zu der Gurtspule 14 angeordneten, rohrförmigen Fortsatz 38 der Gurtspule 14, drei in Reihe angeordneten Torsionsstäben 26, 36 und 37 und ein drehfest gegenüber der Profilschiene 7 blockierbares Blockierteil 41 gebildet ist. In der vorliegenden Ausführungsform sind drei Torsionsstäbe 26, 36 und 37 vorgesehen, welche jeweils mit einem Ende mit der Gurtspule 14 bzw. mit dem rohrförmigen Fortsatz 38 drehfest verbunden oder verbindbar sind und mit dem jeweils anderen Ende durch eine in jeweils einem Steg 16 oder 17 vorgesehene Schalteinrichtung drehfest gegenüber der Profilschiene 7 blockierbar oder von dieser lösbar sind. Damit können die Torsionsstäbe 26, 36 und 37 einzeln oder in Kombination aktiviert werden, wodurch die Rückhaltkräfte auf unterschiedlichen Kraftbegrenzungsniveaus bzw. ein stufenförmiger Kraftbegrenzungsverlauf realisiert werden können. Das Blockierteil 41 kann durch eine fahrzeugsensitiv und/oder gurtbandsensitiv ansteuerbare Blockiereinrichtung in Auszugsrichtung des Sicherheitsgurtes 12 blockierbar sein, wodurch die Kraftbegrenzungseinrichtung 25 blockiert wird, so dass sie nachfolgend bei einem Überschreiten des durch die Kraftbegrenzungseinrichtung 25 selbst definierten Kraftbegrenzungsniveau selbsttätig aktiviert wird. Ferner ist ein pyrotechnischer, irreversibler Gurtstraffer 24 mit einem koaxial zu der Gurtspule 14 angeordneten Antriebsrad 35 vorgesehen, welcher die Gurtspule 14 bei einer Aktivierung über eine zwischengeschaltete Kupplung in Aufwickelrichtung antreibt und den Sicherheitsgurt 12 strafft. Außerdem ist ein reversibler Gurtstraffer 23 mit einem Elektromotor 22 vorgesehen, welcher die Gurtspule 14 bei einer Aktivierung über eine zweite oder auch dieselbe Kupplung wie der pyrotechnische Gurtstraffer 24 in Aufwickelrichtung antreibt und dadurch den Sicherheitsgurt 12 strafft. Der Elektromotor 22 ist ebenfalls koaxial zu der Gurtspule 14 und damit auch zu der Kraftbegrenzungseinrichtung 25 und zu dem pyrotechnischen Gurtstraffer 24 angeordnet. Ferner ist in der Profilschiene 7 des lasttragenden Strukturteils 2 eine elektronische Steuereinheit 29 vorgesehen, welche zur Ansteuerung des Gurtaufrollers 40 und/oder weiterer Bauteile dienen kann.

Das lasttragende Strukturteil 2 ist ein Grundbauteil der Sitzstruktur, indem es weitere Teile der Sitzstruktur wie z.B. die in der Figur 1 zu erkennenden Längsstreben 1 miteinander verbindet. Das Strukturteil 2 hat damit die Aufgabe die Sitzstruktur zu bilden und dient durch den vorgesehenen Hohlraum 21 zusätzlich zur Aufnahme des erfindungsgemäßen Gurtaufrollers 40. Das lasttragende Strukturteil 2 kann als Baugruppe mit dem Gurtaufroller 40 vormontiert und dann bei der Fertigung der Sitzstruktur bzw. des Fahrzeugsitzes als eine Baueinheit endmontiert werden.

Die Profilschiene 7 bildet dabei das Grundbauteil des lasttragendes Strukturteils 2 und ist entsprechend der zu verwirklichenden Verbindung der weiteren Strukturteile in der Sitzstruktur geformt und bemessen. Die Profilschiene 7 kann den bisher erforderlichen Rahmen des Gurtaufrollers 40 ersetzen, indem sie sowohl zur Lagerung des Gurtaufrollers 40 als auch zur Befestigung des Gurtaufrollers 40 an dem Fahrzeugsitz und zur Blockierung der Gurtspule 14 dient.

Der erfindungsgemäße Gurtaufroller 40 ist modulartig mit der Gurtspule 14 und den weiteren Baugruppen, nämlich der Kraftbegrenzungseinrichtung 25, dem pyrotechnischen Gurtstraffer 24 und dem reversiblen Gurtstraffer 23 in einer koaxialen Reihenanordnung ausgebildet. Dabei sind die Baugruppen bewusst so ausgebildet, dass ihre radialen Außenabmessungen die Abmessung des Gurtwickels auf der Gurtspule 14 bei maximal aufgewickelten Sicherheitsgurt 12 nicht überragen, wie in der Figur 3 zu erkennen ist.

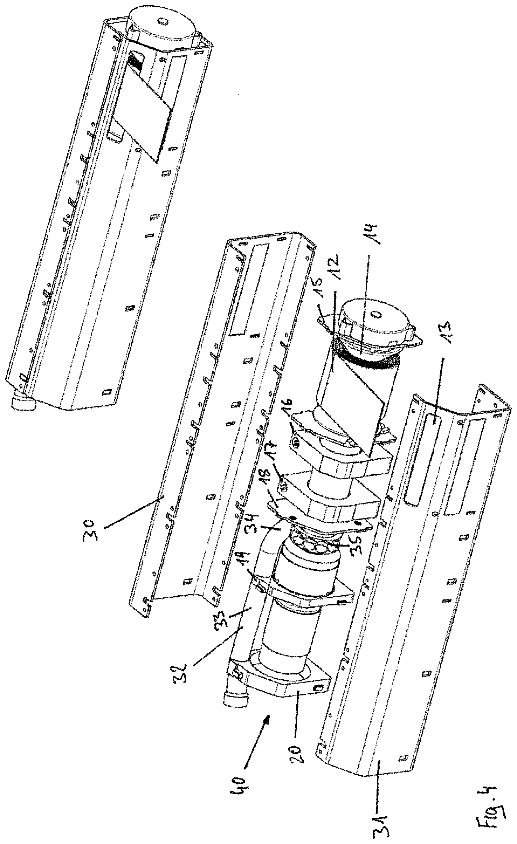

Die Stege 15,16,17,18,19 und 20 können neben ihrer Lagerfunktion zusätzlich oder auch alternativ durch das Vorsehen entsprechender Aufnahmen und einer Anordnung von verschiedenen Funktionseinheiten in oder an den Aufnahmen auch als Funktionswände verstanden werden. Damit sie ihre Lagerfunktion erfüllen können, stützen sich die Stege 15,16,17,18,19 und 20 bevorzugt zwischen den Schenkeln 8 und 9 und der Basisfläche 10 der Profilschiene 7 oder zwischen den in der Figur 4 zu erkennenden Gehäuseteilen 30 und 31 drehfest ab.

In der Figur 4 ist ein alternatives Ausführungsbeispiel zu erkennen, bei dem der erfindungsgemäße Gurtaufroller 40 statt mit einer Profilschiene 7 hier mit einem zweiteiligen Gehäuse mit zwei Gehäuseteilen 30 und 31 versehen ist. Die Gehäuseteile 30 und 31 sind jeweils U-förmig ausgeführt und umfassen die Gurtspule 14 und die weiteren Baugruppen, einschließlich der Stege 15,16,17,18,19 und 20 in der montierten Stellung außenseitig, wie in der rechten oberen Darstellung der Figur 4 zu erkennen ist. Die Gehäuseteile 30 und 31 bilden in der zusammengesetzten Stellung einen im Querschnitt viereckigen länglichen Hohlraum 21. Da die Gurtspule 14 mit dem darauf aufgewickelten Sicherheitsgurt 12 und die weiteren Baugruppen im Querschnitt kreisförmig ausgebildet sind, sind zwischen dem Gurtwickel der Gurtspule 14, den Baugruppen und dem Gehäuse in den Ecken jeweils ein länglicher im Querschnitt in etwa dreieckförmiger Freiraum vorgesehen, welcher hier zur Anordnung des Strafferantriebsrohres 32 genutzt wird. Das Strafferantriebsrohr 32 dient zur Führung einer Antriebseinrichtung, wie z.B. einer Kette aus lose aneinander anliegenden Massekörpern, oder eines elastischen Antriebsstranges, welche bzw. welcher bei einer Aktivierung des pyrotechnischen Gurtstraffers beschleunigt und dadurch in Antriebsverbindung mit dem Antriebsrad 35 gebracht wird. Das Antriebsrad 35 und die Gurtspule 14 werden dadurch nachfolgend zu einer Drehbewegung in Aufwickelrichtung des Sicherheitsgurtes 12 angetrieben. Das Strafferantriebsrohr 32 weist einen Linearabschnitt 33 und einen Krümmungsabschnitt 34 auf und ist derart ausgerichtet und angeordnet, dass es mit dem Linearabschnitt 33 parallel zu der Drehachse der Gurtspule 14 und des Antriebsrades 35 ausgerichtet ist und mit dem Krümmungsabschnitt 34 tangential in Umfangsrichtung auf den Außenumfang des Antriebsrades 35 gerichtet ist. Der Krümmungsabschnitt 34 ist dabei ausschließlich in einer Ebene gekrümmt, so dass der Krümmungsabschnitt 34 und der Linearabschnitt 33 in einer Ebene angeordnet sind, wobei das Strafferantriebsrohr 32 so ausgerichtet ist, dass die durch den Linearabschnitt 33 und den Krümmungsabschnitt 34 aufgespannte Ebene parallel zu der Drehachse der Gurtspule 14 verläuft.

Die Gehäuseteile 30 und 31 bilden in der zusammengesetzten Stellung mit dem darin angeordneten Gurtaufroller 40 ein formstabiles Teil, welches als das in der Figur 1 zu erkennende lasttragende Strukturteil 2 in der Sitzstruktur genutzt werden kann.

Das lasttragende Strukturteil 2 mit der Profilschiene 7 oder den Gehäuseteilen 30 und 31 wurde gemäß der Darstellung in der Figur 1 in einer horizontalen Einbaugeometrie beschrieben, welche Vorteile hinsichtlich einer horizontalen Ausrichtung des Sicherheitsgurtes 12 in der Zuführung auf den Insassen aufweist. Eine horizontale Ausrichtung des Sicherheitsgurtes 12 in der Zuführung auf den Insassen ist insofern von Vorteil, da der Sicherheitsgurt 12 damit horizontal auf die Schulter den Insassen geführt werden kann, ohne nochmals umgelenkt zu werden. Alternativ kann das lasttragende Strukturteil 2 aber auch in einer vertikalen oder schrägen Ausrichtung an der Sitzstruktur angeordnet werden. Der Sicherheitsgurt 12 wird dann in einer schrägen Ausrichtung zugeführt oder mittels einer gesonderten Umlenkeinrichtung in die vorgesehene Zuführrichtung auf den Insassen umgelenkt. Ferner kann das Strukturteil 2 auch statt an einem oberen Rand der Rückenlehne auch an einer tieferen Stelle oder an einer Seite der Sitzstruktur der Rückenlehne angeordnet werden, sofern die Sitzstruktur oder die Zuführung des Sicherheitsgurtes 12 dies erfordert und/oder ermöglicht. Statt der Profilschiene 7 oder der Gehäuseteile 30 und 31 wäre es außerdem auch denkbar, ein rohrförmiges Strukturteil 2 mit einem kreisförmigen oder andersartigen Querschnitt vorzusehen, in welchem der Gurtaufroller 40 angeordnet und insbesondere stirnseitig eingeschoben wird.

## Patentansprüche

1. Gurtaufroller (40) mit
- einer Gurtspule (14),
- einem darauf zu einem Gurtwickel aufwickelbaren Sicherheitsgurt (12), und
- wenigstens einer ersten Baugruppe, wobei
- die erste Baugruppe koaxial zu der Drehachse der Gurtspule (14) und in Reihe zu der Gurtspule (14) angeordnet ist, wobei
- der Gurtaufroller (40) an einem zwischen der Gurtspule (14) und der ersten Baugruppe angeordneten ersten Steg (15,16,17,18,19,20) gelagert ist, und
- wenigstens ein zweiter Steg (15,16,17,18,19,20) zur Lagerung des Gurtaufrollers vorgesehen ist, welcher zu dem ersten Steg (15,16,17,18,19,20) in Axialrichtung des Gurtaufrollers (40) beabstandet ist, und
- einer im Querschnitt U-förmigen Profilschiene (7) mit einer Basisfläche (10) und zwei gegenüberliegenden parallel zueinander verlaufenden von der Basisfläche (10) hochstehenden wandförmigen Schenkeln (8,9), mit
- einer zwischen den Randseiten der Schenkel (8,9) gebildeten Öffnung (28), welche durch ein Einsatzteil (6) verschlossen ist, wobei das Einsatzteil einen zwischen den Schenkeln (8,9) gebildeten Hohlraum (21) verschließt, in dem die Gurtspule (14) und die erste Baugruppe angeordnet sind, wobei sich die Stege (15,16,17,19,20) zwischen den Schenkeln drehfest abstützen, wobei
- eine zweite Baugruppe vorgesehen ist, welche koaxial und in Reihe zu der Gurtspule (14) und zu der ersten Baugruppe angeordnet ist, wobei
der zweite Steg (15,16,17,18,19,20) zwischen der ersten Baugruppe und der zweiten Baugruppe angeordnet ist, wobei
- die erste oder die zweite Baugruppe durch eine Kraftbegrenzungseinrichtung (25) mit einem koaxial zu der Gurtspule (14) angeordneten ersten Torsionsstab (26) gebildet ist.

2. Gurtaufroller (40) nach Anspruch 1, **dadurch gekennzeichnet, dass**,
- die erste Baugruppe in senkrechter Richtung zu der Drehachse der Gurtspule (14) kleinere oder identische Außenabmaße als der maximale Außendurchmesser des Gurtwickels bei vollständig aufgewickeltem Sicherheitsgurt (12) auf der Gurtspule (14) aufweist.

3. Gurtaufroller (40) nach einem der Ansprüche 1 oder 2,
**dadurch gekennzeichnet, dass**
- die erste oder die zweite Baugruppe ein pyrotechnischer Gurtstraffer (24) ist, welcher
- ein Strafferantriebsrohr (32) mit einer darin vorgesehenen pyrotechnisch antreibbaren Antriebseinrichtung und eine die Antriebsbewegung der Antriebseinrichtung auf die Gurtspule (14) übertragenden Antriebsrad (35) aufweist, wobei
- das Strafferantriebsrohr (32) einen Linearabschnitt (33) und einen an dem Ende des Linearabschnittes (33) angeordneten Krümmungsabschnitt (34) aufweist, und
- das Strafferantriebsrohr (32) derart angeordnet ist, dass der Linearabschnitt (33) parallel zu der Drehachse der Gurtspule (14) verläuft und mit dem Krümmungsabschnitt (34) tangential in Umfangsrichtung auf das Antriebsrad (35) gerichtet ist.

4. Gurtaufroller nach Anspruch 3, **dadurch gekennzeichnet, dass**
- das Strafferantriebsrohr (32) derart angeordnet ist, dass der Linearabschnitt und der Krümmungsabschnitt (34) in einer Ebene angeordnet sind, welche parallel zu der Drehachse der Gurtspule (14) verläuft.

5. Gurtaufroller (40) nach einem der Ansprüche 1 bis 4,
**dadurch gekennzeichnet, dass**
- die Kraftbegrenzungseinrichtung (25) wenigstens einen zweiten Torsionsstab (36) aufweist, welcher in Reihe zu dem ersten Torsionsstab (26) angeordnet ist.

6. Gurtaufroller (40) nach Anspruch 4 oder 5, **dadurch gekennzeichnet, dass**
- an einer Stirnseite der Gurtspule (14) ein rohrförmiger, koaxial zu der Drehachse der Gurtspule (14) angeordneter Fortsatz (38) vorgesehen ist, in den der erste und/oder der zweite Torsionsstab (26,36) hineinragt.

7. Gurtaufroller (40) nach Anspruch 6, **dadurch gekennzeichnet, dass**
- der Gurtaufroller (40) mit dem rohrförmigen Fortsatz (38) an dem ersten und/oder zweiten Steg (15,16,17,18,19,20) gelagert ist.

8. Gurtaufroller (40) nach einem der vorangegangenen Ansprüche, **dadurch gekennzeichnet, dass**
- die erste oder die zweite oder eine dritte Baugruppe durch einen reversiblen Gurtstraffer (23) mit einem Elektromotor (22) gebildet ist, wobei
- der Elektromotor (22) mit seiner herausgeführten Antriebswelle koaxial zu der Drehachse der Gurtspule (14) angeordnet ist.
